# EUROPEAN PATENT SPECIFICATION

(11) **EP 4 397 573 B1**
(45) Date of publication and mention of the grant of the patent: **05.03.2025**
(21) Application number: 23150714.6
(22) Date of filing: 09.01.2023
(51) Int. Cl.: B62D 15/02

(54) **ROTARY SENSOR ASSEMBLY FOR MEASURING STEERING ANGLES OF A TRAILED IMPLEMENT AND TRAILED IMPLEMENT FOR AN AGRICULTURAL TRACTOR**
DREHSENSORANORDNUNG ZUR MESSUNG VON LENKWINKELN EINES GEZOGENEN ANBAUGERÄTS UND GEZOGENES ANBAUGERÄT FÜR EINEN LANDWIRTSCHAFTLICHEN TRAKTOR
ENSEMBLE CAPTEUR ROTATIF POUR MESURER LES ANGLES DE DIRECTION D'UN OUTIL REMORQUÉ ET OUTIL REMORQUÉ POUR UN TRACTEUR AGRICOLE

(43) Date of publication of application: 10.07.2024
(73) Proprietor: Kverneland Group Nieuw-Vennep B.V., 2153 LR Nieuw-Vennep (NL)
(72) Inventor: PRINS, Kevin, 1531 NR Wormer (NL)
(74) Representative: Bittner, Thomas L.

(56) References cited:
- US-A1- 2018 057 052
- US-B2- 10 611 406
- US-B2- 11 237 027
- US-B2- 6 494 471
- US-B2- 6 603 305

## Description

The invention relates to a rotary sensor assembly for measuring steering angles of a trailed implement, such as a trailed agricultural sprayer. The invention also relates to a trailed implement for an agricultural tractor having at least one steered wheel coupled to an axle and pivotable relative to the axle about a steering axis.

### Background

Many trailed implements for agricultural tractors are provided with a steering axle. Providing a trailed implement with a steering axle improves stability in different field conditions, especially during headland turns. The provision of a trailed implement, such as an agricultural sprayer, with a large steering angle enables maximum steering possibilities with a tight turning radius. This allows the trailed implement to use small or narrow but high tyres which are ideal for use in row crops to reduce soil compaction. Rotary sensors for steering axles must be adequately configured to handle high loads or shocks which agricultural vehicles and trailed implements are frequently subjected to.

US 6,474,146 B2 describes a rotary sensor that shall be capable of detecting a rotation angle with high precision. The sensor comprises a rotator with an engagement hole for receiving a drive shaft, the drive shaft having a flat portion at a forward end thereof, and an elastic member in elastic contact with the flat portion to press a circular portion of the engagement hole against the drive shaft side such that the drive shaft and the rotator rotate as one body so that forces impacting the shaft transfer to the rotator which may damage the sensor.

EP 3 575 622 B1 relates to a rotary position sensor employed in a combine harvester to detect steering positions thereof. The steering position is detected based on an angular position of a wheel hub relative to the steering axle. The rotary position sensor is attached via an isolator. It includes a mount attached to the steering axle, a linkage attached to the wheel hub, and a torsion spring captured between the mount and the linkage. The isolator takes up vibration and other movement reducing wear and damage to the rotary position sensor. However, the isolator is rather large and decreases measurement precision.

US 11,237,027 B2 describes a rotary encoder employing a disk spring or finger spring providing a clamping force pressing a code disk against an abutment of a shaft. US 6,603,305 B2 relates to a rotary encoder with a detection element and a corresponding code member attached to a rotor equipped with an annular spring member formed of a metal plate with a plurality of tongues on its inner peripheral surface to set a position of a shaft at a center of a mounting aperture. US 6,359,432 B1 also describes a resilient metal disk for connecting a rotating shaft and body. The different resilient designs allow to dampen some impact but may twist in relation to each other and become permanently misaligned and require recalibration prior to being able to measure angles precisely again.

### Summary

It is an object to provide an improved rotary sensor assembly for precisely measuring steering angles, in particular for a trailed implement of an agricultural tractor, which is reliable, robust, easy to attach and/or compact.

For solving the problem, a rotary sensor arrangement according to the independent claim 1 is provided. Further, a trailed implement, such as an agricultural sprayer, according to claim 15 is provided. Additional embodiments are the subject of dependent claims.

According to one aspect, a rotary sensor assembly is provided for measuring steering angles of a trailed implement. The rotary sensor assembly comprises a rotary encoder for determining the steering angle acting between a steered wheel and an axle about a steering axis. The encoder may include a sensor socket and a sensor shaft pivotable with respect to the sensor socket. The rotary sensor assembly further includes a coupling assembly, preferably mountable between the steered wheel and the steering axle. The coupling assembly includes a flange member, an adapter, and a biasing means for connecting the adapter member to the flange member in a force-fitting manner. The flange member is configured for rigidly attaching to the steering axle or steered wheel and the adapter member is configured for rigidly attaching to the rotary encoder. The flange member may comprise two, three, four, five or more, preferably circumferentially spaced, attachment holes for attachment to the steering axle or steered wheel. The adapter may receive a sensor shaft of the rotary encoder and be non-rotatably connect to the sensor shaft, preferably using a set screw, in particular a set screw piercing the adapter at least partially. The flange member includes a disc body with a central aperture receiving the adapter member. In particular, the adapter member is received substantially coaxially in the flange member. Preferably, the central aperture provides clearance between the disc body and the adapter member. The biasing means is integrally formed with the disc body. It may be preferred that the flange member has a solid disc body into which the biasing means is formed, for example by laser cutting. The flange member and biasing means may preferably have the same, particularly constant thickness. The biasing member may preferably be a solid body spring.

In an embodiment of the rotary sensor assembly, the flange member includes at least one alignment feature, in particular a radial protrusion, adapted to cooperate with a corresponding counterpart, such as a groove, of the adapter member for aligning the flange member and the adapter member in parallel, preferably coaxially, in particular with the steering axis with which said rotary sensor assembly is associated. According to an alternative, the alignment feature may be a recess and the counterpart of the adapter member may be a corresponding protrusion. The height of the adapter member in the axial direction may be at least as large as, preferably larger than, the thickness of the flange member in the axial direction. Preferably, the adapter member is at least twice as high as the thickness of the flange member and/or biasing means. The provision of a groove and a corresponding protrusion may advantageously help to avoid misalignment during the assembly of the rotary sensor assembly.

The coupling assembly preferably includes axial clearance between the flange member and the adapter member. The axial clearance is preferably provided while the adapter member received in the flange member and held by the biasing means. Axial clearance may be provided into at least one axial direction or two opposite axial directions. The feature and/or the counterpart includes an axial end stop. The end stop may serve to delimit the axial clearance in one axial direction. The bottom and/or top surface of the flange member, in particular at the alignment feature, may serve as an end stop to delimit the axial clearance. Optionally, the alignment feature and counterpart may engage each other so as to prevent a rotation of the adapter member within the central aperture.

In a further development of the rotary sensor assembly, the at least one alignment feature is arranged diametrically opposite from the biasing means with respect to the steering axis with which the rotary sensor assembly is associated. Preferably the alignment feature is arranged on a first side of the central aperture and the biasing means is arranged on a second side of the aperture opposite the first side. The biasing means may be configured to urge the adapter member against the alignment feature in a first radial direction crosswise with respect to the steering axis.

Additionally, or alternatively, the coupling assembly may include radial clearance provided by the central aperture between the flange member and the adapter member. The biasing means preferably resiliently urges the adapter member into a predefined position where the adapter member is aligned with the flange member. Particularly, the radial offset of the adapter member with respect to the flange member in the first and/or second radial direction is essentially zero during normal operation of the rotary sensor assembly. Preferably, the biasing means resiliently urges the adapter means into a predefined position in the central aperture during normal operation of the rotary sensor assembly and radial clearance is provided only against the biasing force of the biasing member and/or when the biasing means is deflected, for example due to a rocking movement of the trailed implement's wheel. The radial clearance of the adapter inside of the central aperture in the first radial direction and/or in the second radial direction may be limited to no more than 5 mm, in particular no more than 2 mm, preferably no more than 1 mm. In particular, the first radial direction may correspond to the direction in which the biasing means acts on the adapter member, or in other words the direction against the holding force of the basing means. The radial clearance of the adapter inside of the central aperture in the first radial direction may be limited to no more than 1,5 mm, in particular no more than 1 mm, preferably no more than 0,8 mm. In particular, the second radial direction may correspond to a direction crosswise to the direction in which the biasing means acts on the adapter member (in other words: to the right and/or left). The radial clearance of the adapter inside of the central aperture in the second radial direction may be limited to no more than ±1 mm, in particular no more than ±0,75 mm, preferably no more than ±0,5 mm. The radial clearance in the first radial direction corresponding to the direction in which the biasing means exerts its biasing force onto the adapter member may be larger than the radial clearance in the second radial direction.

The biasing means, preferably including a compression spring, may extend for no more than 180°, in particular no more than 135°, preferably no more than 90°, in the circumferential direction with respect to the steering axis. Alternatively or additionally, the biasing means is configured to exert a holding force for engaging the adapter member which holding force is directed into one predefined radial direction thereby defining the biasing means' force vector, preferably corresponding to the driving direction of the trailed implement. The flange member, the adapter member and the biasing means may preferably be adapted to one another such that the biasing means is deflected (in relation to a relaxed state of the biasing means not engaging the adapter member), preferably compressed, by at least 0,05 mm, in particular at least 0,1 mm, preferably at least 0,2 mm, and/or no more than 1 mm, in particular no more than 0,5 mm, preferably no more than 0,4 mm, during rest. Additionally or alternatively, the flange member, the adapter member and the biasing means may preferably be adapted to one another such that a holding force of at least 50 N, in particular at least 100 N, and/or no more than 200 N or in particular no more than 150 N is exerted by the biasing means onto the adapter member during rest.

Further, the coupling assembly may include rotational clearance provided by the central aperture between the flange member and the adapter member, wherein the biasing means urges the adapter member into a predefined position in which the adapter member is rotationally aligned with the flange member. The rotational clearance of the adapter inside of the central aperture may be limited to no more than 30°, in particular no more than 20°, preferably no more than 15°. Preferably, the biasing means resiliently urges the adapter means into the predefined position rotationally aligned with the flange member and rotational clearance is provided only against the biasing force of the biasing member and/or when the biasing means is deflected, for example due to a lateral shock acting on the wheel.

According to an embodiment of the rotary sensor assembly, the adapter member has at least one first flat or substantially flat side surface for engaging the biasing means. The height of the first side surface in the axial direction may be larger than height (or: disc thickness) of the biasing means. The width of the first side surface in a transverse direction with respect to the force vector of the biasing means may be smaller than the biasing mean's width, in particular a spring beam length thereof.

In a further embodiment of the rotary sensor assembly, the adapter member and the aperture are adapted to one another for a surface contact along at least one, in particular flat or substantially flat, pair of contact areas, preferably two pairs, in particular exactly two pairs, of contact areas arranged at a support angle with respect to each other. The support angle may be between 5° and 180°, in particular between 30° and 90°, preferably of about 60°. The provision of a support angle allows the biasing means to urge the adapter member against the surfaces in a wedge-like manner. Engaging the adapter via two pairs of slanted contact areas allows to position (center) the adapter member precisely not only in the radial direction but also rotationally.

Furthermore, the aperture may have at least one flank surface for engaging a corresponding lateral adapter member surface, wherein the at least flank surface is arranged opposite to the biasing means and/or wherein the at least one flank surface is arranged circumferentially adjacent to the alignment feature.

In a preferred embodiment, the adapter member has a polygonal, in particular hexagonal, cross section. The polygonal adapter member is preferably provided with several evenly spaced side surfaces. The adapter member may be realized as a hexagonal nut. A hexagonal nut (hex-nut) provides six flat side surfaces, each of which is offset by 120° around the steering axis with respect to the immediately adjacent side surfaces. One side surface may engage the biasing means. One or two other surfaces may be configured to serve as lateral surfaces for engaging one or two corresponding, preferably flat, flank surfaces of the flange member. The alignment feature may preferably be formed onto or into a side surface of the adapter member, preferably opposite the side surface for engaging the biasing means.

In particular, the biasing means includes at least one cantilever spring comprising at least one spring beam extending in the circumferential direction with respect to the steering axis from a beam base. The at least one spring beam preferably extends in the transverse direction. The spring beam is in particular oriented crosswise, preferably substantially orthogonal, with respect to the force vector of the biasing means. A first spring beam may form a substantially U-shaped or C-shaped arrangement together with a spring base on the flange body.

In a further development, of the rotary sensor, the biasing means comprises at least two sequential spring beams with beam bases arranged on alternating sides. A first spring beam, a second spring beam and possibly further spring beams may be coupled to each other in series. If the biasing means comprises several spring beams, their beam bases can preferably be arranged in an alternating manner such that an overall S-shaped or generally zig-zag-shaped arrangement is formed.

Additionally or alternatively, in a further development of the rotary sensor, the biasing means includes at least one stopper feature arranged on and/or for engagement with a beam end opposite the respective beam's base. It is conceivable that the biasing means may include at least one stopper for each spring beam. A stopper for the first spring beam closest to the biasing means' base may preferably be arranged on the disc body. A spring beam, in particular a second or further spring beam may be provided with a stopper on its side.

Further, a trailed implement is provided for an agricultural tractor. The trailed implement may preferably be an agricultural sprayer or other trailed agricultural implement. The trailed implement has at least one steered wheel which is coupled to an axle and pivotable relative to the axle about a steering axis. The trailed implement includes a frame to which the wheels are attached. The trailed implement in particular includes a drawbar or the like for trailing attachment to an agricultural tractor. Steered wheels may be provided to the frame via a steering axle. The trailed implement comprises at least one rotary sensor as described above which is configured for measuring a steering angle of the steered wheel with respect to the axle. The trailed implement may be provided with at least one first or left steered wheel pivotable about a first steering axis and a second or right steered wheel pivotable about a second steering axis. In a trailed implement comprising two or more steered wheels, a corresponding number of rotary sensor assemblies may be provided.

The flange member of the rotary sensor assembly is preferably non-rotatably connected to the steering axle or frame of the trailed implement, wherein preferably the rotary encoder is non-rotatably coupled to the steering wheel, in particular a steering wheel hub, with respect to the steering axis. Alternatively, the rotary encoder may be non-rotatably coupled to the steering axle or frame of the trailed implement, wherein preferably the flange member is non-rotatably coupled to the steering wheel, in particular a steering wheel hub, with respect to the steering axis. It may be preferred that the biasing means is arranged directly in front of the adapter or directly behind the adapter with respect to the normal driving direction of the trailed implement.

The steered wheel(s) may be pivotable for at least 10°, in particular at least 20°, preferably at least 30°, and/or no more than 90°, in particular no more than 60°, preferably no more than 45° to the right with respect to a straightforward driving direction. Alternatively or additionally, the steered wheel(s) may be pivotable for at least 10°, in particular at least 20°, preferably at least 30°, and/or no more than 90°, in particular no more than 60°, preferably no more than 45° to the left with respect to a straightforward driving direction.

A pair of steering wheels may be attached to a steering axle. It may be preferred that the pair of steering wheels defines a track, preferably a variable track, between 1,0 m and 3,0 m, in particular between 1,2 m and 2,5, preferably between 1,50 m and 2,25 m. The trailed implement may be equippable or equipped with 520/85R46 tyres. The turning radius of the trailed implement may be between 2 m and 7,5 m, in particular between 5 m and 6 m, preferably between 5,25 m and 5,5 m. The trailed implement may have a length from the drawbar lug to the steering axle between 3 m and 10 m, in particular between 4 m and 7,5 m, preferably between 5 m and 5,5 m. The trailed implement may have a total length between 5 m and 12 m, in particular between 6 m and 10 m, preferably between 7 m and 8,5 m.

### Description of embodiments

Following, further embodiments are described by referring to figures, which show:
- Fig. 1: a schematic representation of a trailed implement with a steering axle attached to an agricultural tractor;
- Fig. 2: an exploded view of a rotary sensor assembly attachable to a steering axle;
- Fig. 3: a perspective view of a rotary sensor assembly attached to a wheel pivotably attached to a steering axle;
- Fig. 4: a partial view of the rotary sensor assembly of Fig. 3;
- Fig. 5: another partial view of the rotary sensor assembly of Fig. 3;
- Fig. 6: an exploded view of a rotary sensor assembly;
- Fig. 7: a perspective view of a flange member for a rotary sensor assembly;
- Fig. 8: a perspective view of an adapter member for a rotary sensor assembly;
- Fig. 9: a perspective view of the assembled rotary sensor assembly according to Fig. 6;
- Fig. 10: a top view of the flange member of Fig 7;
- Fig. 11: a top view of the adapter member of Fig. 8; and
- Fig. 12: a top view of an adapter member received in a flange member.

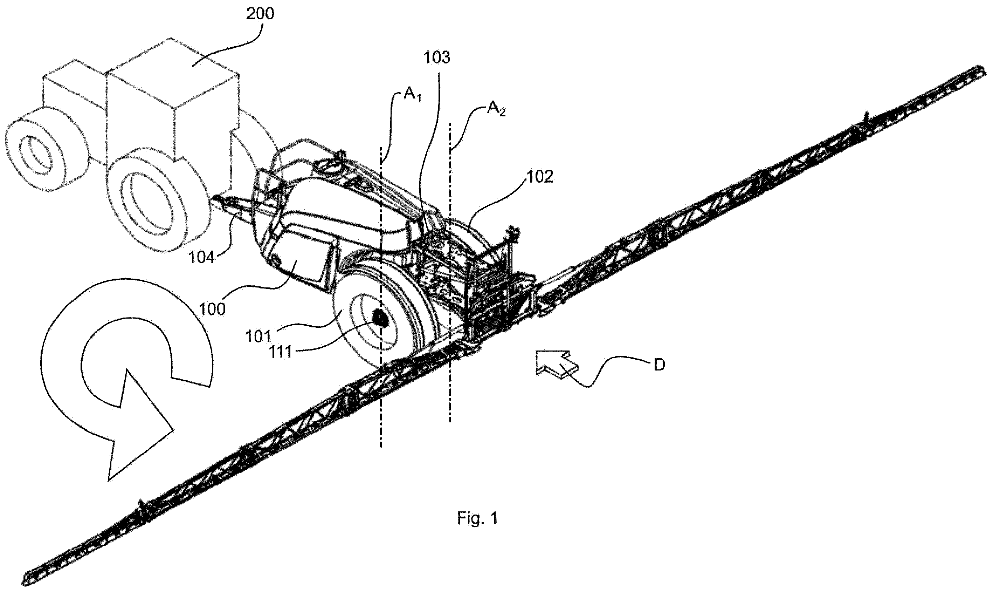

Referring to Fig. 1, an agricultural sprayer provided as a trailed implement 100 for a tractor 200 is shown. Along the boom a plurality of dispensing elements is provided, such as nozzles, the dispensing elements being configured for dispensing a material to the field. The tractor 200 can pull the trailed implement 100 in a generally forward pointing driving direction D. The boom extends in a transverse direction crosswise in relation to the driving direction D. It shall be clear that the sprayer is shown only as an exemplary trailed implement.

The implement is releasably connected to the tractor 200 via a drawbar 104. The implement 100 has a frame 103 to which the drawbar 104 is attached. Two wheels 101, 102 are suspended on the frame 103 via an axle 105. The wheels 101, 102 each have a respective wheel hub 111 around which they rotate while driving.

The axle 105 is a steering axle carrying steered wheels 101, 102, i.e. the left wheel 101 can be pivoted about a left steering axis A₁ and the right wheel 102 can be pivoted about a right steering axis A₂ to allow the trailed implement 100 to be moved with a tight turning radius. The implement 100 and/or tractor 200 is provided with a steering controller configured to turn the implement's steered wheels 101, 102 in accordance with a steering operation defined by a tractor operator.

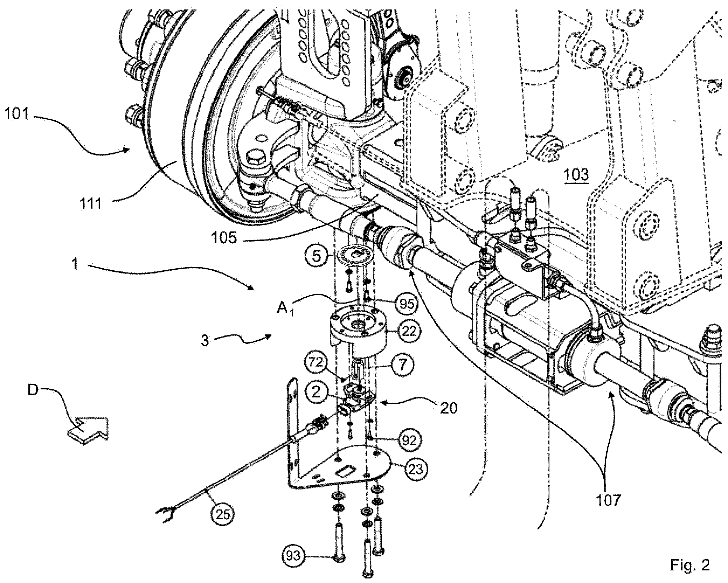

As indicated in Fig. 2, a steering controller may cause a linkage 107 to act upon the wheel hub 111 to set a steering angle in relation to the steering axle 105 onto the steered wheel 101. The steering controller is operatively connected with a rotary sensor arrangement 1 to obtain information concerning the actual steering angle present between the steering axle 105 and steered wheel 101 or 102. The trailed implement 100 may advantageously be provided with one respective rotary sensor assembly 1 for each steered wheel 101, 102.

Hereinbelow, reference is generally made to the rotary sensor arrangement 1 connected to the wheel hub 111 of left steered wheel 101 pivotable about the left steering axis A₁. However, the skilled person understands that the teachings regarding the left rotary sensor arrangement 1 can be readily transferred to a right or any other rotary sensor arrangement (not shown).

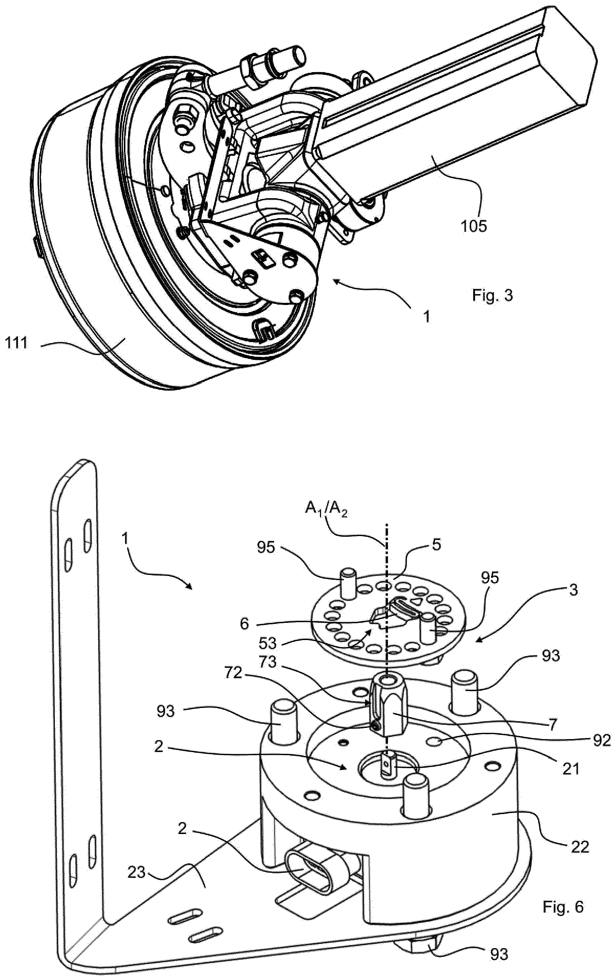

Fig. 3 shows a rotary sensor assembly 1 for measuring the steering angle of the left wheel 101 including its wheel hub 111 in relation to the steering axle 105. The rotary sensor assembly 1 is attached to the pivotable joint connecting the wheel 101 to the axle 105.

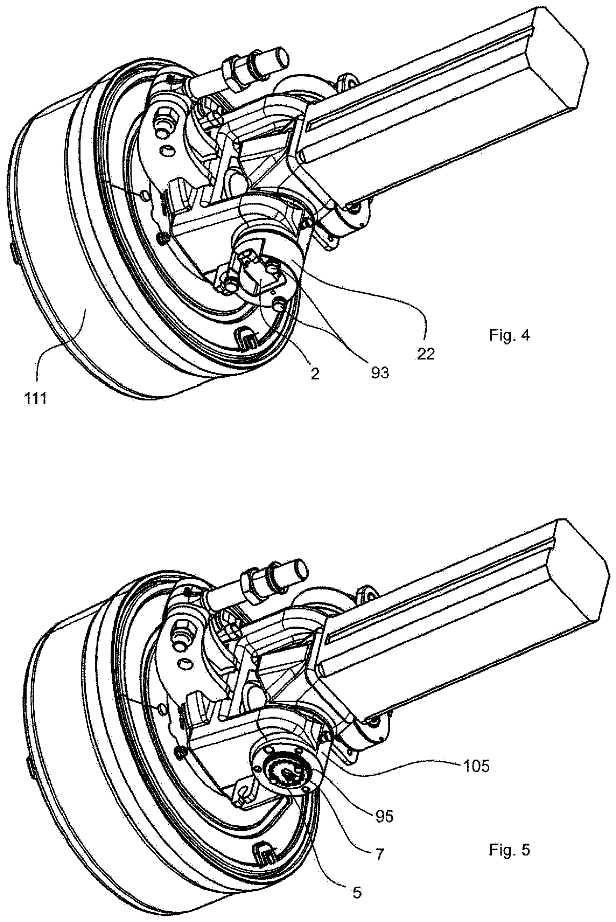

Fig. 4 shows a rotary encoder 2 of the rotary sensor assembly 1 non-rotatably attached to the wheel 101. The rotary encoder 2 includes a sensor socket 20 and a sensor shaft 21 protruding therefrom. The rotary encoder 2 is configured to determine a relative position or angle of the sensor shaft 21 in relation to the sensor socket 20. The rotary encoder 2, in particular its sensor socket 20, is rigidly connected with sensor attachment screws 92 to a support bushing 22. The support bushing 22 is rigidly connected to the wheel hub 111 via support attachment screws 93. The rotary encoder 2 is connected to the wheel 101 such that they move about the steering axis A₁ as one.

Fig 5 shows a coupling assembly 3 of the rotary sensor assembly 1 comprising a flange member 5 and an adapter member 7. The adapter member 7 is received in a central aperture 50 of the flange member 5. The flange member 5 and the adapter member 7 are arranged substantially concentrically with respect to one another and with respect to the steering axis A₁. The flange member 5 has multiple attachment apertures 58, which may receive flange attachment screws 95 rigidly attaching the flange member 5 to the steering axle 105. When the flange member 5 is non-rotatably attached to the steering axle 105, it substantially moves as one together with the axle 105 and remaining frame 103 of the trailed implement 100.

Fig. 6 illustrates the how the rotary sensor assembly 1 may be assembled. The rotary sensor assembly 1 includes the rotary encoder 2, the flange member 5 and the adapter member 7 as well as a biasing means 6 realized as a flat compression spring which will be described in detail hereinbelow. In order to forcibly mate the adapter member 7 and the flange member 5, the biasing means 6 may be adapted to experience a deflection during rest, for example of approximately 0,3 mm, so as to exert a holding force, for example of 111 N. The biasing means 6 may be configured to have a spring constant of at least 250 N/mm, in particular at least 300 N/mm, and/or no more than 1000 N/mm, in particular no more than 500 N/mm, preferably no more than 400 N/mm.

The rotary encoder 2 may be received within a support bushing 22 to which a cable guide 23 can be attached for protecting sensor signal cables 25 of the rotary encoder 2 from unintentionally colliding with the wheel 101 or other parts of the trailed implement 100 or surroundings.

The biasing means 6 connects the adapter member 7 to the flange member 5 in a force-fitting manner. The biasing means 6 causes the adapter member 7 to move as one with the flange member 5 unless forces or shocks occur which are large enough to overcome the retention force provided by the biasing means. Large shocks or forces are expected to occasionally occur during operation of a trailed agricultural implement 100 moving in rough terrain, for example in case it meets obstacles on a field. The biasing means 6 is configured to resiliently deform under the effect of such large forces or shocks thereby protecting the encoder 2 from damage.

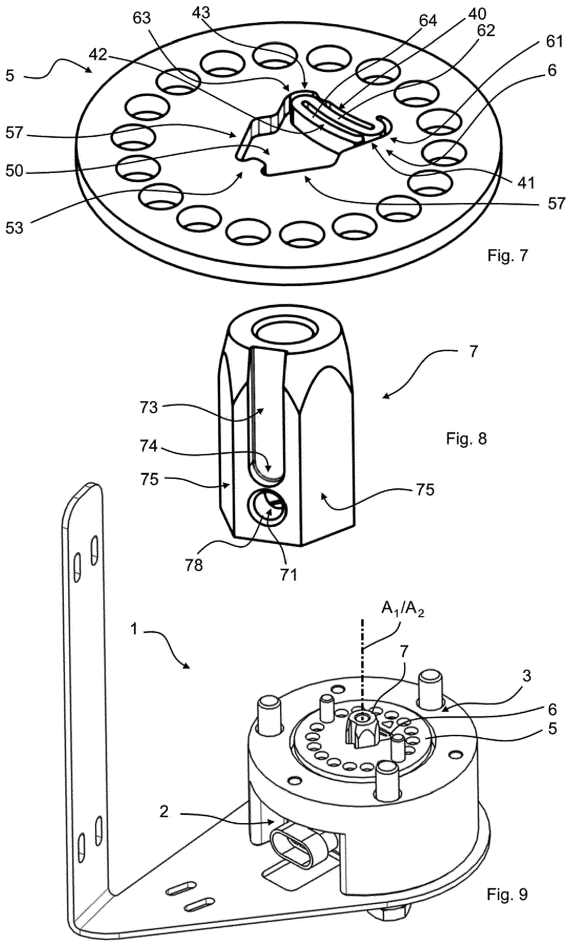

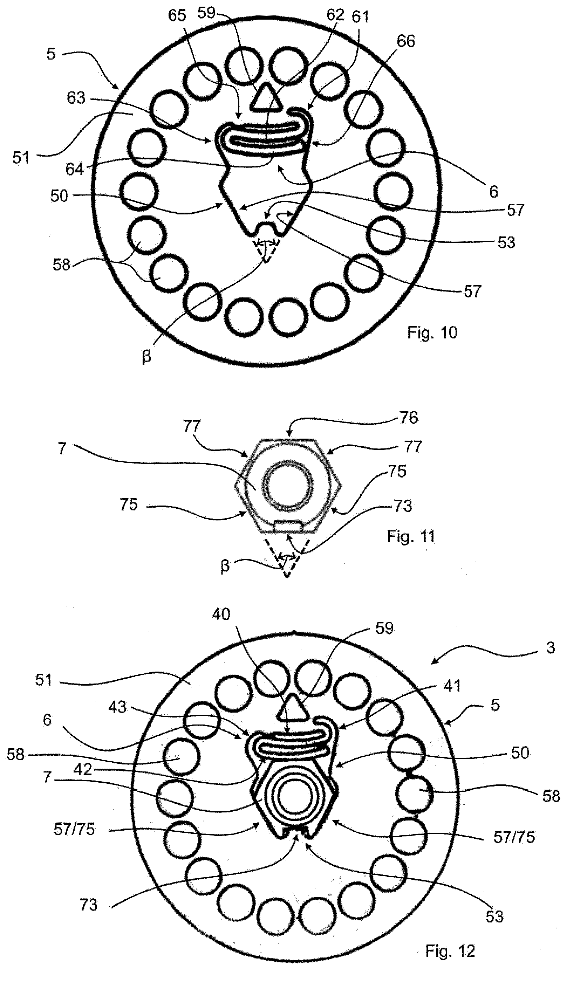

The adapter member 7 is shown in detail in Figs. 8 and 11. The adapter member 7 includes a central bore 71 for receiving the sensor shaft 21 of the rotary encoder 2 protruding from its sensor socket 20. The adapter member 7 further has a radial locking screw hole 78 for receiving a set screw 72 to rigidly and non-rotatably connect the adapter member 7 to the rotary encoder 2, as indicated in Fig. 6. It is preferred, that the central bore 71 receives the eccentric (here: partially flat) sensor shaft 21 in a form-fitting manner. The central bore 71 and the sensor shaft 21 preferably have the same or at least a complementary cross-section. The locking screw 72 may serve to secure and hold the sensor shaft 21 inside the adapter member 7. When the sensor shaft 21 is inserted into the central bore 71, the adapter 7 moves as one with the sensor shaft 21.

The adapter member 7 has a generally hexagonal cross section. It may be called a hexagonal nut. The hexagonal adapter member 7 has six side surfaces equally spaced along its circumference. A first side surface or engagement surface 76 is configured for engaging the biasing means 6. The side surfaces adjacent to the engagement surface 76 may be clear from contact with the flange member 5 during normal operation and only serve as end stop surfaces 77 in case of large force or shocks overcoming the biasing member's retention force.

The side surface diametrically opposite to the engagement surface 76 is provided with a groove 73 as a counterpart for an alignment feature 53 of the flange member 5. The lateral side surfaces 75 opposite to the engagement surface 76 and adjacent to the surface provided with the groove 73 may additionally serve to engage flange member 5 at corresponding flanks 57 thereof. The lateral surfaces 75 are arranged at a support angle β with respect to each other for engaging the flanks 57 of the central aperture 50 in a wedge like manner. It shall be clear that the feature 53 and groove 73 are optional and the side surface opposite the engagement surface 76 may be flat (not shown). Alternatively, the flat lateral side surfaces 75 may be directly adjacent one another (not shown).

The flange member 5 is shown in detail in Figs. 7 and 10. The flange member has a disc body 51. The disc body 51 has a generally circular shape and is provided with a central aperture 50. The disc body 51 has an outer diameter 3 to 10 times as large as, in particular approximately 5 times as large as, the transversal width of the central aperture 50. The thickness of the disc body may be constant. The outer diameter of the disc body is preferably about 10 to 50 times as large as its thickness. The disc body 51 furthermore includes a set of attachment apertures 58 for attachment screws 95. Additionally, the flange member 5 may be provided with an indicator 59 to show the orientation intended for mounting on the axle 105.

The flange member 5 and the biasing means 6 are formed integrally. In the present example, the apertures 50, 58, 59, the alignment feature 53 and the biasing means 6 (or rather gaps 40, 41, 42, 43 surrounding the solid spring realizing the biasing means) are laser cut from a sheet metal, thus forming the disc body 51. Alternatively, the flange member 5 and biasing means 6 could be fabricated in a generative manufacturing method, such as 3D-printing.

The biasing means 6 is configured to provide a resilient retention force in a radial direction with respect to the steering axis A₁. The biasing means 6 may be configured so as not to act evenly in any arbitrary radial direction with respect to the steering axis. It is preferred that the biasing means 6 is configured to exert a holding force for engaging the adapter member 7 which is directed into one predefined radial direction, preferably corresponding to the driving direction D. Preferably, the biasing means 6 is configured to retract in the driving direction D in case of excessive forces or shock.

With respect to the steering axis A₁ extending through the center of the central aperture 50, the biasing means 6 covers less than 180° of the inner circumference of the aperture 50, preferably between 90° and 135°. The biasing means 6 in particular does not circumferentially surround the adapter member in the central aperture 50 of the flange member 5. The biasing member 6 is arranged only in a limited circumferential section of the central aperture 50. The biasing means 6 may preferably be arranged on the side of the central aperture 50 facing forward in the driving direction D. The rear half of the central aperture 50 is preferably free of any biasing means.

In the present example, the biasing means 6 comprises to spring beams 62, 64 having alternatingly arranged beam bases 61, 63. The spring beams 62 and 64 extend crosswise with respect to the vector of the holding force provided by the biasing means 6 to the adapter member 7. The flat solid body spring realizing the biasing means 6 is generally S-shaped. The biasing means 6 protrudes into the central aperture 50. Finger-like bays 41, 42, 43, 44 or gaps surrounding the biasing means extend from the central aperture 50 into the spring body 51. The bays 41, 42, 43, 44 protrude through the entire width of the biasing means 9 and disc body 51. The bays 41, 42, 43, 44 provide clearance for sections of the biasing means 6 to move in relation to each other and in relation to the solid disc body 51 surrounding the central aperture 50 and the biasing means 6.

With respect to the forward driving direction D as indicated by the indicator 59, the first beam base 61 is arranged on the right. The first beam base 61 has a C-shaped or U-shaped cross section, the first end of which connects to the disc body 51 and the second end of which connects to the first beam 62. The outer circumference of the first beam base 61 is surrounded by a first bay 41. The first beam 62 extends from the first beam base 61 to the left. A second bay 40 separates the first beam 62 from the adjacent section of the disc body 51. The disc body 51 is provided with a first stopper feature 65 protruding in the driving direction or direction or spring motion. The first stopper feature 65 protrudes into the second bay 40. The first stopper feature is arranged for engagement with the first beam 62 at its end opposite from its base 61.

With respect to the driving direction D as indicated by the indicator 59, the second beam base 63 is arranged on the left. The second beam base 63 connects to the first beam 62 opposite to the first beam base 61. The second beam base 63 has a C-shaped or U-shaped cross section, the first end of which connects to the first beam 62 and the second end of which connects to the second beam 64. The outer circumference if the second beam base 63 is surrounded by a third bay 43. The second beam 64 extends to the right from the second beam base 63. A further bay 42 extends between first and second beams 62, 64. The second beam 64 is provided with a second stopper feature 66 protruding in the driving direction or direction or spring motion. The second stopper feature 66 protrudes into the bay 42 between the adjacent spring beams 62, 64. The second stopper feature 66 is arranged on the second beam 64 at its end opposite from its base 63 for engagement with the first beam 62.

Opposite to the biasing means 6, the central aperture 50 of the flange member 5 extends in a shape partially complementary to the adapter member 7. In the present example, the shape of the central aperture 50 is partially hexagonal. In the driving direction D or main spring action direction of the basing means 6, the complementary shape of the central aperture 50 is dimensioned larger than the adapter member.

Disregarding the biasing means 6 for a moment, the central aperture 50 provides clearance for the adapter member 7. Particularly, the central aperture may provide clearance for the adapter member to move within the constraints of the central aperture in a radial direction with respect to the steering axis A₁, particularly in the direction corresponding to the driving direction D. Furthermore, as the exemplarily shown central aperture 50 is shaped similarly to but larger than the cross section of the adapter member, the aperture 50 may in particular provide clearance for the adapter member to pivot about the steering axis A₁ within the constraints of the central aperture. The adapter member 7 may alternatively or additionally be provided with clearance to be moveable within the constraints of the central aperture 50, for example to move laterally and/or tilt about a different, possibly perpendicular, axis. The biasing means 6, however, urges the adapter member 7 into a predefined position within the central aperture.

Fig. 9 illustrates the assembled rotary sensor assembly 1 of Fig. 6 wherein the adapter member 7 is received in the central aperture 50 of the flange member 5. Fig. 12 shows the engagement of the flange member 5 and adapter member 7 in detail. Figs. 9 and 12 show the adapter 7 arranged in the flange member's central aperture 50 according to its predefined position. The groove 73 and feature 53 help to ascertain, during mounting of the rotary sensor assembly, a correct alignment of the adapter member 7 and rotary encoder 2 with the flange member 5. Through the pairing of the groove 73 and feature 53, the assembler is prevented from mounting the sensor in an acute angle.

The height of the adapter member 7 in the axial direction is substantially larger than the thickness of the flange member 5 and biasing means 6. The adapter member 7 pierces through the flange member 5. The extension of the groove 73 receiving the alignment feature 53 is larger than the thickness of the flange member and particularly the alignment feature 53. Preferably, the groove 73 is about two to five times as large as the disc's thickness. The feature and/or its counterpart may be provided with an axial end strop 74. The alignment feature and corresponding counterpart are adapted to each other so as to allow some freedom of movement of the flange member 5 with respect to the adapter member in the axial direction of the steering axis A₁ which preferably corresponds to the vertical direction. By rendering the adapter member 7 and flange member 7 moveable relatively freely with respect to each other in the axial and possibly vertical direction, the rotary encoder 2 is allowed to move relative to the steering axle 105, thereby relieving the rotary encoder 2 from most of the vibrations and impacts occurring in this direction while the trailed implement 100 travels. The biasing means 6 of the flange member 5 does not act against relative movement of the adapter 7 in the axial direction.

The biasing means 6 urges the adapter member 7 into force-fitting engagement with the flange member 5 in the radial direction corresponding to the driving direction D but incidentially also into engagement in the transverse direction T crosswise with respect to the driving direction D and the axial direction due to the wedge like engagement along the flank surfaces 57.

The flank surfaces 57 of limiting the central aperture 50 opposite the biasing means 6 may, as indicated in Fig. 10, be arranged at the same (or substantially the same) support angle β with respect to one another as the lateral surfaces 75 of the adapter member 5. The lateral surfaces 75 of the adapter are preferably substantially flat. It may alternatively or additionally be preferred that the flank surfaces 57 of the central aperture 50 are substantially flat. The biasing means 6 urges the adapter member's lateral surfaces 75 into a substantially planar engagement with the flank surfaces 57, thereby forcing the adapter member 5 into a predefined position coaxial with the flange member 7 and with virtually zero offset in the first and/or second radial direction. The wedge-like cooperation along the lateral surfaces 75 and flank surfaces 57 causes a predefined angular relationship of the flange member 5 and the adapter member 7. While one paring of one lateral surface 75 and one flank surface 57 may suffice to bring the adapter member 7 and flange member 5 into a predefined arrangement, it may be preferred to use two, particularly exactly two, such pairings.

The alignment feature 53 is arranged diametrically opposite from the biasing means 6 and engages the counterpart in the adapter realized as a groove 73. The pairing of the alignment feature 53 and the groove 73 protects the coupling assembly 3 from misalignment. The pairing of the alignment feature 53 with the groove retains a general alignment even in case of excessive forces or shocks deflecting the biasing means 6. The alignment feature 53 and its counterpart ascertain that the adapter member 5 may be returned to its predetermined position after the biasing means 6 has been deflected.

## Claims

1. Rotary sensor assembly (1) for measuring steering angles of a trailed implement (100), comprising
- a rotary encoder (2) for determining the steering angle acting between a steered wheel (101, 102) and an axle (105) about a steering axis (A₁, A₂); and
- a coupling assembly (3) comprising
- a flange member (5) configured for rigidly attaching to the axle (105) or steered wheel (101, 102),
- an adapter member (7) configured for rigidly attaching to the rotary encoder (2), and
- a biasing means (6) for connecting the adapter member (7) to the flange member (5) in a force-fitting manner,
wherein
- the flange member (5) includes a disc body (51) with a central aperture (50) receiving the adapter member (7), **characterised in that**
- the biasing means (6) is integrally formed with the disc body (51).

2. Rotary sensor assembly (1) according to claim 1, **characterized in that** the flange member (5) includes at least one alignment feature (53) adapted to cooperate with a corresponding counterpart, of the adapter member (7) for aligning the flange member (5) and the adapter member (7) in parallel or coaxially.

3. Rotary sensor assembly (1) according to claim 2, **characterized in that** the coupling assembly (3) includes axial clearance between the flange member (5) and the adapter member (7), wherein the feature (53) and/or the counterpart includes an axial end stop (74).

4. Rotary sensor assembly (1) according to claim 2 or 3, **characterized in that** the at least one alignment feature (53) is arranged diametrically opposite from the biasing means (6) with respect to the steering axis (A₁, A₂).

5. Rotary sensor assembly (1) according to one of the preceding claims, **characterized in that** the coupling assembly (3) includes radial clearance provided by the central aperture (50) between the flange member (5) and the adapter member (7), wherein the biasing means (6) resiliently urges the adapter member (7) into a predefined position in which the adapter member (7) is aligned with the flange member (5).

6. Rotary sensor assembly (1) according to one of the preceding claims, **characterized in that** the biasing means (6), extends for no more than 180 ° in the circumferential direction with respect to the steering axis (A₁, A₂) and/or is configured to exert a holding force for engaging the adapter member (7) which holding force is directed into one predefined radial direction.

7. Rotary sensor assembly (1) according to one of the preceding claims, **characterized in that** the coupling assembly (3) includes rotational clearance provided by the central aperture (50) between the flange member (5) and the adapter member (7), wherein the biasing means (6) urges the adapter member (7) into a predefined position in which the adapter member (7) is rotationally aligned with the flange member (5).

8. Rotary sensor assembly (1) according to one of the preceding claims, wherein the adapter member (7) has a flat side surface (76) for engaging the biasing means (6).

9. Rotary sensor assembly (1) according to one of the preceding claims, wherein the adapter member (7) and the aperture (50) are adapted to one another for a surface contact along at least one pair of contact areas.

10. Rotary sensor assembly (1) according to claim 9, characterized the aperture (50) has at least one flank surface (57) for engaging a corresponding lateral adapter member surface (75), wherein the at least flank surface (57) is arranged opposite to the biasing means (6) and/or wherein the at least one flank surface (57) is arranged circumferentially adjacent to the alignment feature (53).

11. Rotary sensor assembly (1) according to one of the preceding claims, **characterized in that** the adapter member (7) has a polygonal cross section.

12. Rotary sensor assembly (1) according to one of the preceding claims, **characterized in that** the biasing means (6) includes at least one cantilever spring comprising at least one spring beam (62, 64) extending in the circumferential direction with respect to the steering axis from a beam base (61, 63).

13. Rotary sensor assembly (1) according to claim 12, **characterized in that** the biasing means (6) comprises at least two sequential spring beams (62, 64) with beam bases (61, 63) arranged on alternating sides.

14. Rotary sensor assembly (1) according to claim 12 or 13, **characterized in that** the biasing means (6) includes at least one stopper feature (65, 66) arranged on and/or for engagement with a beam end opposite the respective beam's base (61, 63)

15. Trailed implement (100) for coupling to an agricultural tractor (200) having at least one steered wheel (101, 102) coupled to an axle (105) and pivotable relative to the axle (105) about a steering axis (A₁, A₂), further comprising at least one rotary sensor assembly (1) according to one of the preceding claims for measuring a steering angle of the steered wheel (101, 102) with respect to the axle (105).

## Patentansprüche

1. Drehsensoranordnung (1) zum Messen von Lenkwinkeln eines gezogenen Anbaugeräts (100), umfassend
- einen Drehgeber (2) zum Bestimmen des Lenkwinkels, der zwischen einem gelenkten Rad (101, 102) und einer Achse (105) um eine Lenkachse (A₁, A₂) wirkt; und
- eine Kopplungsanordnung (3), umfassend
- ein Flanschelement (5), das zur starren Befestigung an der Achse (105) oder dem gelenkten Rad (101, 102) eingerichtet ist,
- ein Adapterelement (7), das zur starren Befestigung an dem Drehgeber (2) eingerichtet ist, und
- ein Vorspannmittel (6) zum kraftschlüssigen Verbinden des Adapterelements (7) mit dem Flanschelement (5),
wobei
- das Flanschelement (5) einen Scheibenkörper (51) mit einer zentralen Öffnung (50) aufweist, die das Adapterelement (7) aufnimmt,
**dadurch gekennzeichnet, dass**
- das Vorspannmittel (6) einstückig mit dem Scheibenkörper (51) ausgebildet ist.

2. Drehsensoranordnung (1) nach Anspruch 1, **dadurch gekennzeichnet, dass** das Flanschelement (5) mindestens ein Ausrichtungsmerkmal (53) aufweist, das dazu eingerichtet ist, mit einem entsprechenden Gegenstück des Adapterelements (7) zusammenzuwirken, um das Flanschelement (5) und das Adapterelement (7) parallel oder koaxial auszurichten.

3. Drehsensoranordnung (1) nach Anspruch 2, **dadurch gekennzeichnet, dass** die Kopplungsanordnung (3) ein axiales Spiel zwischen dem Flanschelement (5) und dem Adapterelement (7) aufweist, wobei das Merkmal (53) und/oder das Gegenstück einen axialen Endanschlag (74) aufweist.

4. Drehsensoranordnung (1) nach Anspruch 2 oder 3, **dadurch gekennzeichnet, dass** das mindestens eine Ausrichtungsmerkmal (53) in Bezug auf die Lenkachse (A₁, A₂) diametral gegenüber dem Vorspannmittel (6) angeordnet ist.

5. Drehsensoranordnung (1) nach einem der vorhergehenden Ansprüche, **dadurch gekennzeichnet, dass** die Kopplungsanordnung (3) ein radiales Spiel aufweist, das durch die zentrale Öffnung (50) zwischen dem Flanschelement (5) und dem Adapterelement (7) bereitgestellt wird, wobei das Vorspannmittel (6) das Adapterelement (7) elastisch in eine vordefinierte Position drängt, in der das Adapterelement (7) mit dem Flanschelement (5) ausgerichtet ist.

6. Drehsensoranordnung (1) nach einem der vorhergehenden Ansprüche, **dadurch gekennzeichnet, dass** sich das Vorspannmittel (6) um nicht mehr als 180° in der Umfangsrichtung in Bezug auf die Lenkachse (A1, A2) erstreckt und/oder dazu eingerichtet ist, eine Haltekraft zum Eingreifen mit dem Adapterelement (7) auszuüben, wobei die Haltekraft in eine vordefinierte radiale Richtung gerichtet ist.

7. Drehsensoranordnung (1) nach einem der vorhergehenden Ansprüche, **dadurch gekennzeichnet, dass** die Kopplungsanordnung (3) ein Drehspiel aufweist, das durch die zentrale Öffnung (50) zwischen dem Flanschelement (5) und dem Adapterelement (7) bereitgestellt wird, wobei das Vorspannmittel (6) das Adapterelement (7) in eine vordefinierte Position drängt, in der das Adapterelement (7) mit dem Flanschelement (5) drehausgerichtet ist.

8. Drehsensoranordnung (1) nach einem der vorhergehenden Ansprüche, wobei das Adapterelement (7) eine flache Seitenfläche (76) zum Eingreifen mit dem Vorspannmittel (6) aufweist.

9. Drehsensoranordnung (1) nach einem der vorhergehenden Ansprüche, wobei das Adapterelement (7) und die Öffnung (50) für einen Flächenkontakt entlang mindestens eines Paars von Kontaktflächen aneinander angepasst sind.

10. Drehsensoranordnung (1) nach Anspruch 9, **dadurch gekennzeichnet, dass** die Öffnung (50) mindestens eine Flankenfläche (57) zum Eingreifen mit einer entsprechenden seitlichen Adapterelementfläche (75) aufweist, wobei die mindestens eine Flankenfläche (57) gegenüber dem Vorspannmittel (6) angeordnet ist und/oder wobei die mindestens eine Flankenfläche (57) in Umfangsrichtung benachbart zu dem Ausrichtungsmerkmal (53) angeordnet ist.

11. Drehsensoranordnung (1) nach einem der vorhergehenden Ansprüche, **dadurch gekennzeichnet, dass** das Adapterelement (7) einen polygonalen Querschnitt aufweist.

12. Drehsensoranordnung (1) nach einem der vorhergehenden Ansprüche, **dadurch gekennzeichnet, dass** das Vorspannmittel (6) mindestens eine freitragende Feder aufweist, die mindestens einen Federbalken (62, 64) umfasst, der sich in der Umfangsrichtung in Bezug auf die Lenkachse von einer Balkenbasis (61, 63) erstreckt.

13. Drehsensoranordnung (1) nach Anspruch 12, **dadurch gekennzeichnet, dass** das Vorspannmittel (6) mindestens zwei aufeinanderfolgende Federbalken (62, 64) mit Balkenbasen (61, 63) aufweist, die auf abwechselnden Seiten angeordnet sind.

14. Drehsensoranordnung (1) nach Anspruch 12 oder 13, **dadurch gekennzeichnet, dass** das Vorspannmittel (6) mindestens ein Anschlagmerkmal (65, 66) aufweist, das an und/oder zum Eingreifen mit einem Balkenende gegenüber der jeweiligen Balkenbasis (61, 63) angeordnet ist.

15. Gezogenes Anbaugerät (100) zum Koppeln mit einem landwirtschaftlichen Traktor (200), der mindestens ein gelenktes Rad (101, 102) aufweist, das mit einer Achse (105) gekoppelt ist und relativ zu der Achse (105) um eine Lenkachse (A₁, A₂) schwenkbar ist, ferner ausweisend mindestens eine Drehsensoranordnung (1) nach einem der vorhergehenden Ansprüche zum Messen eines Lenkwinkels des gelenkten Rads (101, 102) in Bezug auf die Achse (105).

## Revendications

1. Ensemble de capteur rotatif (1) pour mesurer des angles de direction d'un outil remorqué (100), comprenant
- un codeur rotatif (2) pour déterminer l'angle de direction formé entre une roue dirigée (101, 102) et un essieu (105) autour d'un axe de direction (A₁, A₂) ; et
- un ensemble de couplage (3) comprenant
- un élément de bride (5) configuré pour être fixé de manière rigide à l'essieu (105) ou à la roue dirigée (101, 102),
- un élément adaptateur (7) configuré pour être fixé de manière rigide au codeur rotatif (2), et
- un moyen de sollicitation (6) pour relier l'élément adaptateur (7) à l'élément de bride (5) par engagement par force,
dans lequel
- l'élément de bride (5) comprend un corps de disque (51) avec une ouverture centrale (50) recevant l'élément adaptateur (7),
**caractérisé en ce que**
- le moyen de sollicitation (6) est formé d'un seul tenant avec le corps de disque (51).

2. Ensemble de capteur rotatif (1) selon la revendication 1, **caractérisé en ce que** l'élément de bride (5) comprend au moins une caractéristique d'alignement (53) adaptée pour coopérer avec une contrepartie correspondante de l'élément adaptateur (7) pour aligner l'élément de bride (5) et l'élément adaptateur (7) parallèlement ou coaxialement.

3. Ensemble de capteur rotatif (1) selon la revendication 2, **caractérisé en ce que** l'ensemble de couplage (3) comprend un jeu axial entre l'élément de bride (5) et l'élément adaptateur (7), dans lequel la caractéristique (53) et/ou la contrepartie comprend une butée d'extrémité axiale (74).

4. Ensemble de capteur rotatif (1) selon la revendication 2 ou 3, **caractérisé en ce que** l'au moins une caractéristique d'alignement (53) est agencée de manière diamétralement opposée au moyen de sollicitation (6) par rapport à l'axe de direction (A₁, A₂).

5. Ensemble de capteur rotatif (1) selon l'une des revendications précédentes, **caractérisé en ce que** l'ensemble de couplage (3) comprend un jeu radial fourni par l'ouverture centrale (50) entre l'élément de bride (5) et l'élément adaptateur (7), dans lequel le moyen de sollicitation (6) sollicite élastiquement l'élément adaptateur (7) dans une position prédéfinie dans laquelle l'élément adaptateur (7) est aligné avec l'élément de bride (5).

6. Ensemble de capteur rotatif (1) selon l'une des revendications précédentes, **caractérisé en ce que** le moyen de sollicitation (6) ne s'étend pas sur plus de 180° dans la direction circonférentielle par rapport à l'axe de direction (A₁, A₂) et/ou est configuré pour exercer une force de retenue pour mettre en prise l'élément adaptateur (7), laquelle force de retenue est dirigée dans une direction radiale prédéfinie.

7. Ensemble de capteur rotatif (1) selon l'une des revendications précédentes, **caractérisé en ce que** l'ensemble de couplage (3) comprend un jeu de rotation fourni par l'ouverture centrale (50) entre l'élément de bride (5) et l'élément adaptateur (7), dans lequel le moyen de sollicitation (6) sollicite l'élément adaptateur (7) dans une position prédéfinie dans laquelle l'élément adaptateur (7) est aligné en rotation avec l'élément de bride (5).

8. Ensemble de capteur rotatif (1) selon l'une des revendications précédentes, dans lequel l'élément adaptateur (7) a une surface latérale plate (76) pour mettre en prise le moyen de sollicitation (6).

9. Ensemble de capteur rotatif (1) selon l'une des revendications précédentes, dans lequel l'élément adaptateur (7) et l'ouverture (50) sont adaptés l'un à l'autre pour un contact de surface le long d'au moins une paire de zones de contact.

10. Ensemble de capteur rotatif (1) selon la revendication 9, **caractérisé en ce que** l'ouverture (50) possède au moins une surface de flanc (57) pour mettre en prise une surface d'élément adaptateur latérale correspondante (75), dans lequel l'au moins une surface de flanc (57) est agencée à l'opposé du moyen de sollicitation (6) et/ou dans lequel l'au moins une surface de flanc (57) est agencée de manière circonférentiellement adjacente à la caractéristique d'alignement (53).

11. Ensemble de capteur rotatif (1) selon l'une des revendications précédentes, **caractérisé en ce que** l'élément adaptateur (7) a une section transversale polygonale.

12. Ensemble de capteur rotatif (1) selon l'une des revendications précédentes, **caractérisé en ce que** le moyen de sollicitation (6) comprend au moins un ressort en porte-à-faux comprenant au moins une poutre de ressort (62, 64) s'étendant dans la direction circonférentielle par rapport à l'axe de direction à partir d'une base de poutre (61, 63).

13. Ensemble de capteur rotatif (1) selon la revendication 12, **caractérisé en ce que** le moyen de sollicitation (6) comprend au moins deux poutres de ressort séquentielles (62, 64) avec des bases de poutre (61, 63) agencées sur des côtés alternés.

14. Ensemble de capteur rotatif (1) selon la revendication 12 ou 13, **caractérisé en ce que** le moyen de sollicitation (6) comprend au moins une caractéristique de butée (65, 66) agencée sur et/ou pour un engagement avec une extrémité de poutre opposée à la base de poutre respective (61, 63).

15. Outil remorqué (100) pour le couplage à un tracteur agricole (200) ayant au moins une roue dirigée (101, 102) couplée à un essieu (105) et pouvant pivoter par rapport à l'essieu (105) autour d'un axe de direction (A₁, A₂), comprenant en outre au moins un ensemble de capteur rotatif (1) selon l'une des revendications précédentes pour mesurer un angle de direction de la roue dirigée (101, 102) par rapport à l'essieu (105).
